# EUROPÄISCHE PATENTSCHRIFT

(11) **EP 1 659 288 B1**
(45) Veröffentlichungstag und Bekanntmachung des Hinweises auf die Patenterteilung: **21.03.2007**
(21) Anmeldenummer: 05022637.2
(22) Anmeldetag: 18.10.2005
(51) Int. Cl.: F04B 1/14, F04B 27/10, F04B 27/08, F16H 23/00

(54) **Axialkolbenmaschine**
Axial piston pump
Pompe à piston axiale

(30) Priorität: 23.11.2004 DE 102004056464
(43) Veröffentlichungstag der Anmeldung: 24.05.2006
(73) Patentinhaber: Schaeffler KG, 91074 Herzogenaurach (DE)
(72) Erfinder: Oetjen, Jürgen, 91074 Herzogenaurach (DE); Bauer, Jörg, 91056 Erlangen (DE)

(56) Entgegenhaltungen:
- DE-A1- 3 400 633
- DE-A1- 10 152 097
- DE-A1- 19 738 813
- DE-U1- 9 112 170
- GB-A- 672 173

## Beschreibung

### Anwendungsgebiet der Erfindung

Die Erfindung betrifft eine Antriebsanordnung für eine Axialkolbenmaschine, insbesondere für eine Axialkolbenpumpe, mit einer antreibbaren Antriebswelle, mit der drehfest ein Körper verbunden ist, an dem Pumpenkolben anliegen, so dass bei Rotation des Körpers die Pumpenkolben eine axiale Hin- und Herbewegung ausführen.

### Hintergrund der Erfindung

Derartige Antriebe für Axialkolbenpumpen werden oftmals als Taumelantriebe realisiert. Die Taumelscheibe ist eine kreisförmige Scheibe, deren Ebene schräg zu der durch die Scheibenmitte laufenden Drehachse liegt und deren Umfang bei der Drehbewegung der Achse periodische Auf- und Abbewegungen in Achsrichtung ausführt. Die an der Taumelscheibe anliegenden Kolben führen dabei eine axiale Hin- und Herbewegung aus, so dass ein Medium förderbar ist.

Eine derartige Axialkolbenmaschine ist beispielhaft in der DE 197 38 813 A1 vorbeschrieben. Die einzige Figur dieses Dokumentes zeigt eine Axialkolbenpumpe, wie sie vorzugsweise in Hochdruckreinigungsgeräten verwendet wird. Die Axialkolbenpumpe umfasst einen Taumelantrieb, der einen um eine Drehachse D einer Antriebswelle drehbaren Taumelkörper aufweist. Der Taumelkörper ist an der Antriebswelle befestigt. Eine zu der Drehachse D geneigt angeordnete, an dem Taumelkörper unter Zwischenschaltung eines Axialkugellager drehbar gelagerte Taumelscheibe liegt mit ihrer von dem Axialkugellager abgewanden Stirnseite an einem Kolben an. Der Taumelkörper ist unter Zwischenschaltung eines Schrägkugellager an einem Maschinenteil abgestützt. Das Schrägkugellager umfasst einen aus Blech im Tiefziehverfahren hergestellten Außenring, der eine Kugelrille aufweist, weiter sind ein Kugelkranz und eine an dem Taumelkörper spanlos hergestellte Kugelrille vorgesehen. Zwischen seinen Enden ist der Taumelkörper als sich in Richtung auf die Taumelscheibe erweiternder Kegel ausgeführt, wobei der Kegel innerhalb einer Zylinderfläche Z liegt, die von dem Kugelrillengrund der Kugelrille tangiert wird. Diese Zylinderfläche Z ist senkrecht zur Taumelscheibe angeordnet.

Bei diesen Taumelscheibenantrieb ist zum einen von Nachteil, dass im Taumelbetrieb eine undefinierte Bewegung erzeugt wird. Zum anderen ist der Taumelkörper durch seine konstruktive Gestaltung sehr schwer herstellbar. Dies hat zur Folge, dass der Taumelkörper mit mehrstufigen Spezialwerkzeugen hergestellt werden muß, was seine Fertigung wesentlich verteuert.

### Zusammenfassung der Erfindung

Ausgehend von den Nachteilen des bekannten Standes der Technik liegt der Erfindung daher die Aufgabe zugrunde, eine Antriebsanordnung für eine Axialkolbenmaschine bereitzustellen, deren rotierender Körper, an dem die Pumpenkolben anliegen, sich wesentlich einfacher herstellen lässt.

Erfindungsgemäß wird diese Aufgabe nach dem kennzeichnenden Teil von Anspruch 1 in Verbindung mit dessen Oberbegriff dadurch gelöst, dass der Körper als ein rotationssymmetrischer Hohlkörper ausgebildet ist, der aus einem Boden besteht, von dem sich eine unter einem Winkel verlaufende konische Seitenwand erstreckt, an deren Innenfläche die Pumpenkolben anliegen, wobei der Boden um einen Betrag exzentrisch versetzt mit der Antriebswelle verbunden ist.

Dieser konisch ausgebildete rotationssymmetrischen Hohlkörper lässt sich aufgrund seiner einfachen Form kostengünstig herstellen, weil im Vergleich zum Taumelscheibenantrieb wesentlich einfacher gestaltete Werkzeuge verwendbar sind. Ein weiterer Vorteil ist darin begründet, dass zwischen den Kolbenstirnflächen und dem konisch ausgebildeten Hohlkörper ein exaktes, kinematisches Abwälzen der Pumpenkolben erfolgt, so dass ein besserer Wirkungsgrad gegeben ist, ein geringerer Verschleiß realisiert ist, der wiederum längere Schmierintervalle ermöglicht. Da die anzutreibenden Kolben in den Innenraum des konisch ausgebildeten Hohlkörpers hineinragen, ergibt sich außerdem eine kürzere Bauweise der Antriebsordnung in axialer Richtung.

Weitere vorteilhafte Ausführungsvarianten sind in den Unteransprüchen 2 bis 8 beschrieben.

So ist nach Anspruch 2 vorgesehen, dass zwischen dem Boden des Hohlkörpers und der Antriebswelle ein eine Unwucht ausgleichendes Element angeordnet ist, das gemäß Anspruch 3 als eine Scheibe ausgebildet ist. Auf diese Weise ist sichergestellt, dass insbesondere bei hochdrehenden Pumpenantrieben die Massenträgheitskräfte, bedingt durch die exzentrische Anordnung des rotationssymmetrischen Hohlkörpers, in einfacher Weise ausgeglichen werden können.

Eine besonders vorteilhafte, weil ein exaktes, kinematisches Abwälzen zwischen Kolbenstirnfläche und dem konusartigen rotationssymmetrischen Hohlkörper garantierend, geht aus Anspruch 4 hervor. Danach ist vorgesehen, dass die Pumpenkolben an einem Ende einen kegligen Bereich aufweisen und von einem Radial- Axialwälzlager aufgenommen sind, bestehend aus einer äußeren Laufhülse mit einem zylindrischen Bereich, der an einem Ende in einen radial nach innen gerichteten Bord übergeht und am anderen Ende eine kegelige Einbördelung aufweist, wobei im zylindrischen und im kegeligen Bereich in Käfigen geführte Zylinderrollen abwälzen, deren Innenlaufbahnen vom Pumpenkolben gebildet sind und wobei die axiale Anstellung der Pumpenkolben gegen den rotationssymmetrischen Hohlkörper über ein Federelement realisiert ist.

Der Vorteil dieser erfindungsgemäßen Lageranordnung besteht darin, dass sowohl Radial- also auch Axiallasten und zusätzliche Kippmomente aufnehmbar sind. In diesen Zusammenhang ist in Weiterbildung der Erfindung nach Anspruch 5 vorgesehen, dass der Käfig des im kegligen Bereich angeordenten Wälzlagers mit einem Permanentmagneten versehen ist. Dieser wirkt mit dem Pumpenkolben zusammen, so dass das Radial- Axialwälzlager nicht vom Pumpenkolben abgleiten kann, was wiederum die Montage wesentlich vereinfacht. Die konisch äußere Laufhülse lässt sich durch spanlose Formgebungsvorgänge in einfacher Weise herstellen. Der kegelförmige Bereich der äußeren Laufhülse kann durch eine kegelige Einbördelung an einem Ende der Laufhülse gebildet sein. Die Herstellung dieser Laufbahn liegt somit im Rahmen der normalen Blechbearbeitung und erfordert keine zusätzlichen Teile und keine zusätzlichen Bearbeitungsvorgänge. Ebenfalls ist es in einfacher Weise möglich, die Laufhülse im Anschluß an die kegelige Einbördelung gegebenenfalls mit einem geschlossenem Boden zu versehen.

Eine weitere Variante der Antriebsanordnung geht aus Anspruch 6 hervor. Danach ist vorgesehen, dass die Pumpenkolben als einseitig mit einem Boden verschlossene Hohlkolben ausgebildet sind, die in einer Aufnahmebohrung über ein Radiallager drehbar gehalten sind, wobei am antriebseitigen Ende des Kolbens eine kegelartige Magnetkappe aufgepresst ist, die an der konischen Seitenwand des rotationssymmetrischen Hohlkörpers anliegt.

Der Vorteil dieser Variante liegt darin, dass die erforderliche Verbindung zwischen den Pumpenkolben und dem rotationssymmetrischen Hohlkörper durch magnetische Kräfte erfolgt, so dass Federelemente entbehrlich sind. Eine weitere Vorteil liegt darin begründet, dass die Pumpenkolben durch ihre hohle Ausbildung in Leichtbauweise herstellbar sind. Auch ist von Vorteil, dass die Pumpenkolben im vorliegenden Fall rotieren und durch das Radiallager sehr reibungsfrei gehalten sind.

Eine weitere Antriebsanordnung ist in Anspruch 7 beschrieben. Hiernach sollen die Pumpenkolben in einer Aufnahmebohrung über ein Radiallager drehbar gehalten sein und mit einem gehärteten kegligen Bereich direkt an der konischen Seitenwand des rotationssymmetrischen Hohlkörpers anliegen, wobei die axiale Anstellung der Pumpenkolben gegen den rotationssymmetrischen Hohlkörper über ein Federelement realisiert ist.

In diesem Fall ist nach Anspruch 8 vorgesehen, dass im antriebsseitigen Bereich der Pumpenkolben ein aus zwei Laufscheiben bestehendes Axialschrägrollenlager angeordnet ist, dessen eine Laufscheibe drehfest mit dem in Umfangsrichtung rotierenden Pumpenkolben verbunden ist und dessen andere nicht rotierende Laufscheibe einen ersten Anlagepunkt für das Federelement bildet, während ein zweiter Anlagepunkt vom Radiallager gebildet ist.

Die Erfindung wird an nachstehenden Ausführungsbeispielen näher erläutert.

### Kurze Beschreibung der Zeichnungen

Es zeigen:
- Figuren 1, 3, 5: je einen Längsschnitt durch unterschiedlich gestalte Antriebsanordnungen,
- Figuren 2, 4, 6: einen Querschnitt durch unterschiedliche Antriebsanordnungen gemäß den Figuren 1, 3, 5,

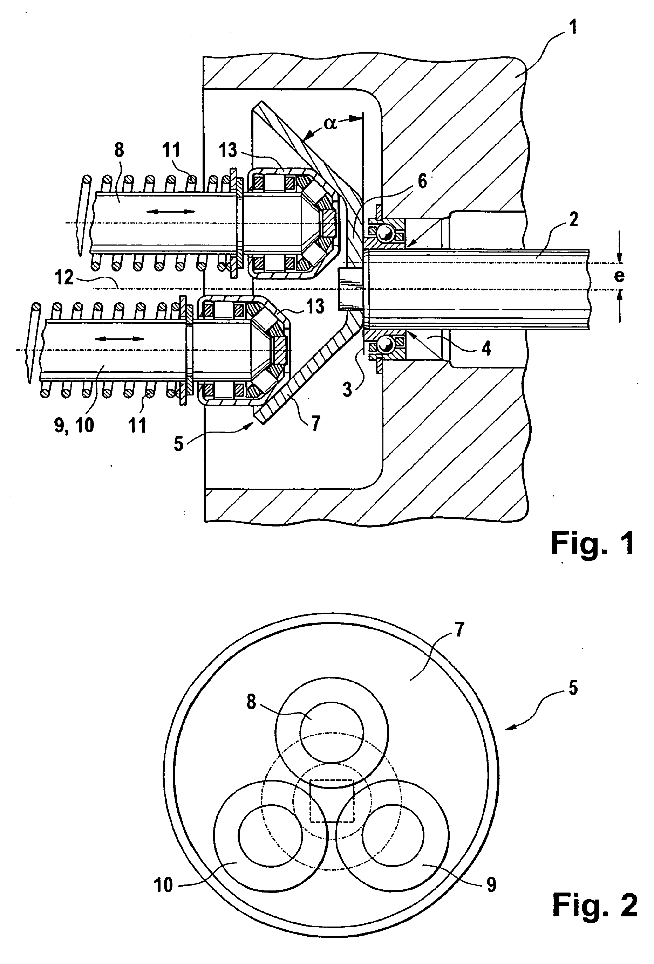

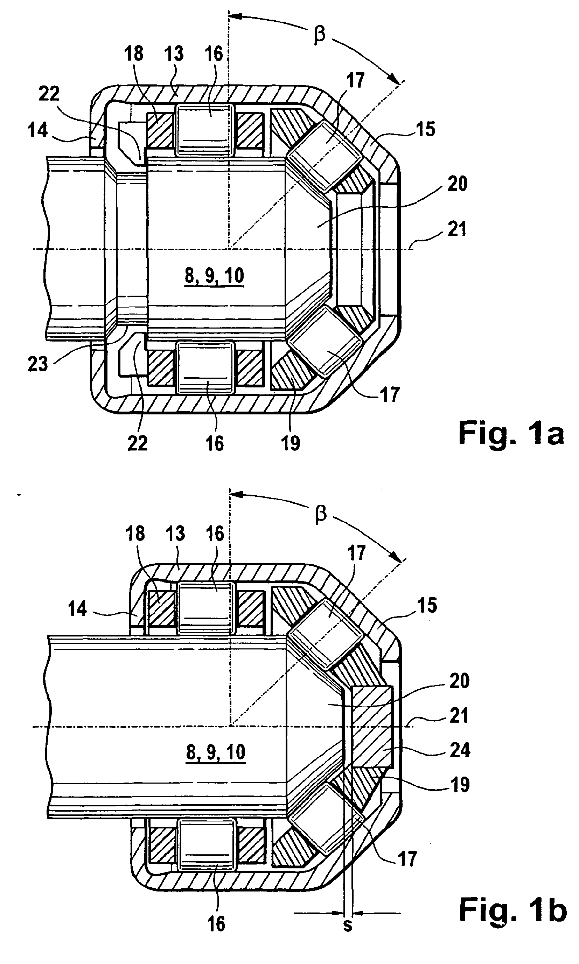

- Figur 1a, 1b: eine vergrößerte Darstellung einer Einzelheit aus Figur 1 und

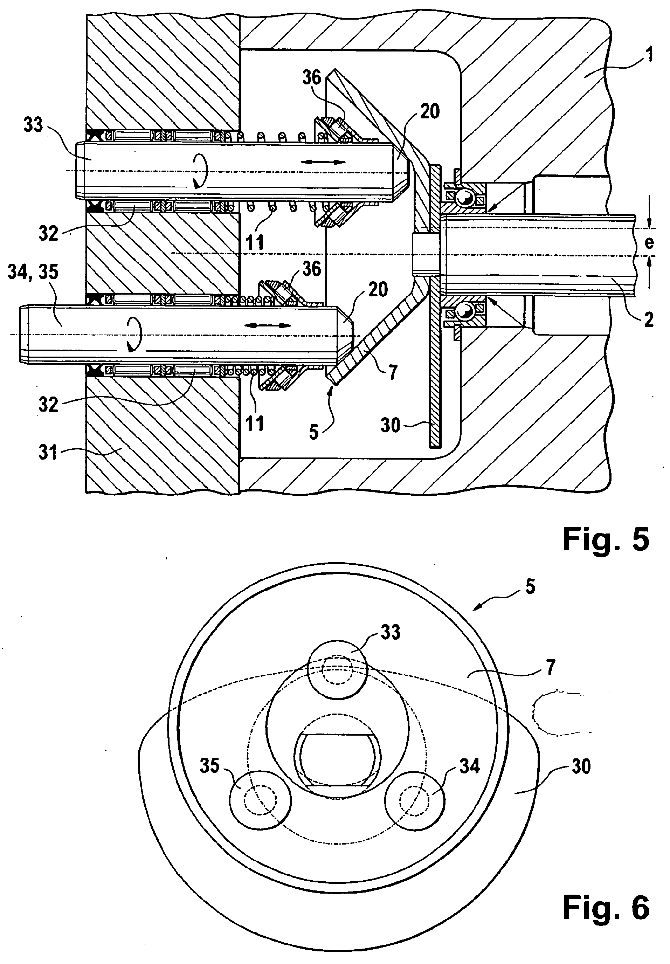

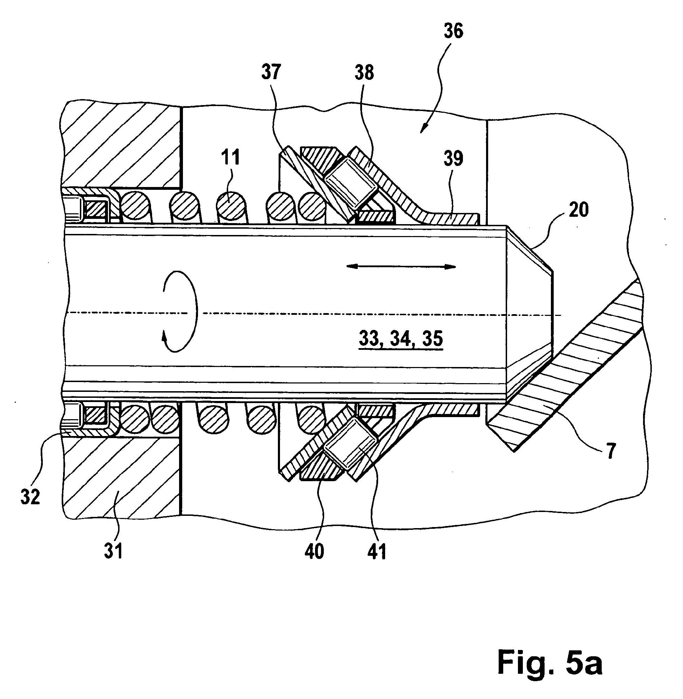

- Figur 5a: eine vergrößerte Darstellung einer Einzelheit aus Figur 5

### Ausführliche Beschreibung der Zeichnungen

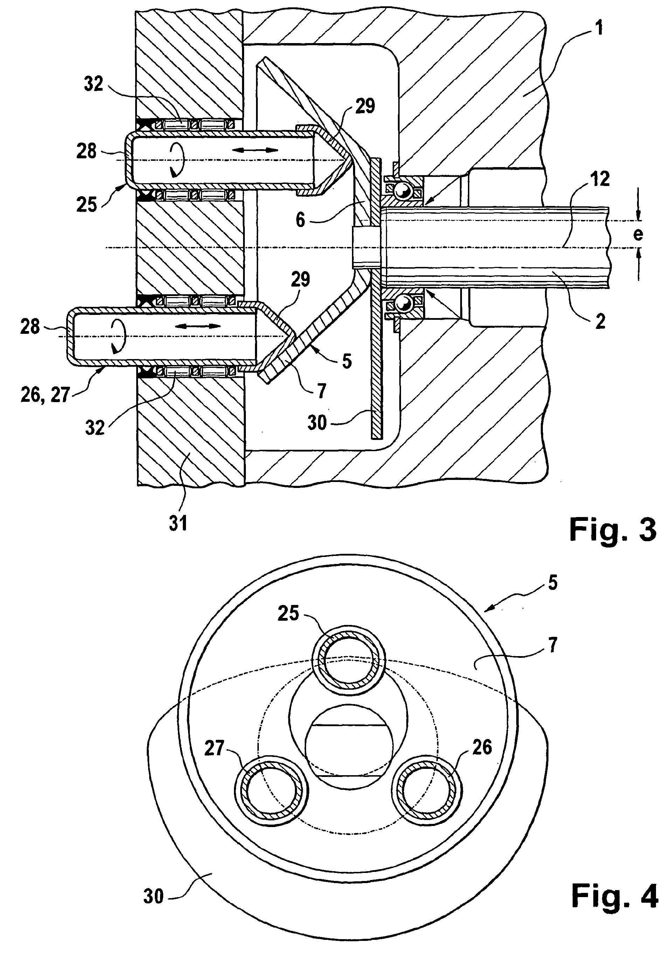

Wie aus den Figuren 1 und 2 ersichtlich, ist in einem Gehäuse 1 eine Antriebswelle 2 über ein Wälzlager 3 in Form eines Schrägkugellagers gehalten, das in der einen Richtung durch eine Dichtung 4 abgedichtet ist. Die Antriebswelle 2 ist an ihrer Stirnseite drehfest mit einem konisch ausgebildeten schüsselartigen rotationssymmetrischen Hohlkörper 5 verbunden, wobei dessen Boden 6 mit der Stirnfläche der Antriebswelle 2 um den Betrag e exzentrisch versetzt verbunden ist. Vom Boden 6 erstreckt sich eine unter dem Winkel α konisch verlaufende Seitenwand 7, an deren Innenfläche die Kolben 8, 9, 10 anliegen, die mit Hilfe von Federelementen 11 an die Innenfläche der konisch verlaufenden Seitenwand 7 angefedert sind. Auf den antriebseitigen Enden der Kolben 8, 9, 10 sitzt je ein Radial- Axialwälzlager, das auftretende radiale, axiale Kräfte und Kippmomente sicher und reibungsarm auf die axial pulsierenden Kolben 8, 9 10 überträgt. Bei Rotation der Antriebswelle 2 um ihre Drehachse 12 rotiert der rotationssymmetrische Hohlkörper 5 exzentrisch mit, so dass die Kolben 8, 9, 10 ihren axialen Abstand gemäß den eingetragenen Pfeilen vom Boden 6 periodisch ändern und sich dabei auf der Innenfläche der Seitenwand 7 zwischen einer oberen und einer unteren Endstellung ständig hin und her bewegen, so dass ein Meduim förderbar ist.

Das in den Figuren 1a und 1b dargestellte Radial- Axialwälzlager besteht aus einer äußeren Laufhülse 13, die an ihrem einen Ende einen radial nach innen gerichteten Bord 14 und an ihrem anderen Ende eine kegelige Einbördelung 15 aufweist. Sowohl im zylindrischen als auch im kegeligen Bereich der äußeren Laufhülse 13 rollen zylindrische Wälzkörper 16 und 17 ab, die in Käfigen 18 und 19 untergebracht sind. Demnach rollt im zylindrischen Bereich ein aus Rollen 16 und Käfig 18 bestehende Radialrollenkranz ab, während im kegeligen Bereich ein aus Rollen 17 und Käfig 19 bestehender Axialschrägrollenkranz abwälzt. Die zugehörigen Innenlaufbahnen werden durch die Kolben 8, 9, 10 gebildet, die an ihrem einen Ende je einen kegeligen Bereich 20 aufweisen. Wie weiter erkennbar, verlaufen sowohl die Außen- als auch die Innenlaufbahnen der Wälzkörper 17 im kegligen Bereich unter einem Winkel β geneigt zur Kolbenachse 21, der in beiden Ausführungsbeispielen 45 ° beträgt. Für ein präzises Funktionieren der Lageranordnung ist dafür zu sorgen, dass im kegligen Bereich sowohl die Innen- als auch die Außenlaufbahn den gleichen Neigungswinkel β zur Kolbenachse 21 aufweisen. Wie aus Figur 1 weiter erkennbar, ist der die zylindrischen Wälzkörper 16 aufnehmende Käfig 18 an einem Ende mit radial nach innen gerichteten Vorsprüngen 22 versehen die in je eine zugehörige Nut 23 der Kolben 8, 9, 10 eingreifen. Auf diese Weise ist sichergestellt, dass beim Montagevorgang die Radial- Axialwälzlageranordnung nicht von den Kolben 8, 9, 10 abgleiten kann. Nach Figur 1 b wird das Abgleiten der Radial- Axialwälzlageranordnung von den Kolben 8, 9, 10 derart verhindert, indem der die zylindrischen Wälzkörper 17 aufnehmende Käfig 19 in seinem Zentrum einen Permanentmagneten 24 aufnimmt, der mit den Kolben 8, 9, 10 zusammenwirkt, so daß sich beide Teile nicht voneinander lösen können. Die Figur zeigt weiter, dass zwischen der Stirnfläche der Kolben 8, 9, 10 im kegligen Bereich 20 ein Spalt s gebildet ist, der wegen einer guten magnetischen Haftung beider Teile aneinander ≤ 1 mm sein sollte.

Die in den Figuren 3 und 4 dargestellte Antriebsanordnung für eine Axialkolbenmaschine unterscheidet sich von der in den Figuren 1 und 2 gezeigten Antriebsanordnung in zwei Punkten. Zum einen durch die Anordnung einer Ausgleichsscheibe 30, die zwischen dem Boden 6 des Hohlkörpers 5 und der Antriebswelle 2 angeordnet ist. Auf diese Weise ist sichergestellt, dass bei erhöhten Drehgeschwindigkeiten auftretende Unwuchten vermieden werden können. Zum anderen sind die Kolben 25, 26, 27 als Hohlkolben ausgebildet, die an einem Ende durch je einen Boden 28 verschlossen sind. An dem der Antriebseite zugewandten Ende weisen die Hohlkolben 25, 26, 27 je eine kegelartige Magnetkappe 29 auf, die auf den Hohlkolben 25, 26, 27 aufgepreßt ist. Diese Magnetkappe 29 wirkt mit der Seitenwand 7 des rotationssymmetrischen Hohlkörper 5 zusammen, d.h., sie sind durch magnetische Kräfte aneinander gehalten, so dass im vorliegenden Ausführungsbeispiel auf einen Anstellung der Hohlkolben 25, 26, 27 gegen den rotationssymmetrischen Hohlkörpers 5 mittels Federelemente verzichtet werden kann. Die Hohlkolben 25, 26, 27 sind in einem Gehäuse 31 über je ein Radiallager 32 in Form eines doppelreihigen Nadellagers drehbar gehalten. Wie die Figur durch die eingezeichneten Pfeile erkennen lässt, werden die Hohlkolben 25, 26, 27 bei Rotation der Antriebswelle 2 über den rotationssymmetrischen Hohlkörper 5 in axialer Richtung hin und her bewegt und rotieren um ihre eigene Achse. Auf diese Weise ist eine besonders reibungsarme Lagerung möglich, wobei die Hohlkolben 25, 26, 27 darüber hinaus ein geringes Gewicht aufweisen.

Anstelle der Hohlkolben können im vorliegenden Ausführungsbeispiel auch massive Kolben aus Keramik verwendet werden, die im Gehäuse 31 nicht über das Radialwälzlager 32, sondern über ein Sinterlager gehalten sind.

In den Figuren 5 und 6 ist eine Antriebsanordnung gezeigt, deren Kolben 33, 34,35, genauso wie in Figur 3 über ein Radiallager 32, das als ein doppelreihiges Nadellager ausgebildet ist, im Gehäuse 31 aufgenommen sind. Am antriebsseitigen Ende weisen die Kolben 33, 34, 35 einen gehärteten kegligen Bereich 20 auf, mit dem sie direkt an der konisch verlaufenden Seitenwand 7 des rotationssymmetrischen Hohlkörpers 5 anliegen. Die Anstellung der Kolben 33, 34, 35 gegen den rotationssymmetrischen Hohlkörper 5 erfolgt über das Federelement 11, das einerseits am Radiallager 32 und andererseits am Axialschrägrollenlager 36 abgestützt ist.

Wie aus der vergrößerten Darstellung in Figur 5a ersichtlich, weist das Axialschrägrollenlager 36 zwei Laufscheiben 37, 38 auf, zwischen denen auf zugehörigen Laufbahnen in einem Käfig 40 geführte zylindrische Wälzkörper 41 abwälzen. Während die Laufscheibe 38 über ihren axialen Flansch 39 drehfest mit den Kolben 33, 34, 35 verbunden ist, weist die Laufscheibe 37 einen Innendurchmesser auf, der etwas größer als der Durchmesser der Kolben 33, 34, 35 ist, so dass diese bei rotierenden Kolben 33, 34, 35 nicht mit diesen rotiert, sondern feststeht. Wie die Figur weiter zeigt, ist das Federelement 11 einerseits am Radiallager 32 und andererseits an der Laufscheibe 37 des Axialschrägrollenlagers 36 abgestützt und bewirkt dadurch, dass die Kolben 33, 34, 35 gegen die konisch verlaufende Seitenwand 7 des rotationssymmetrischen Hohlkörpers 5 angepreßt sind. Wie die eingezeichneten Pfeile in den Figuren 5 und 5a verdeutlichen, führen die Kolben 33. 34, 35 bei Rotation der Antriebswelle 2 aufgrund des exzentrisch angeordneten rotationssymmetrischen Holkörpers 5 sowohl eine Längsbewegung in axialer Richtung als auch eine Drehbewegung um ihre eigene Achse aus.

### Bezugszeichen

- 1: Gehäuse
- 2: Antriebswelle
- 3: Wälzlager
- 4: Dichtung
- 5: rotationssymmetrischer Hohlkörper
- 6: Boden
- 7: Seitenwand
- 8: Kolben
- 9: Kolben
- 10: Kolben
- 11: Federelement
- 12: Drehachse
- 13: äußere Laufhülse
- 14: Bord
- 15: kegelige Einbördelung
- 16: zylindrische Wälzkörper
- 17: zylindrische Wälzkörper
- 18: Käfig
- 19: Käfig
- 20: kegliger Bereich
- 21: Kolbenachse
- 22: Vorsprung
- 23: Nut
- 24: Permanentmagnet
- 25: Hohlkolben
- 26: Hohlkolben
- 27: Hohlkolben
- 28: Boden
- 29: kegelartige Magnetkappe
- 30: Ausgleichsscheibe
- 31: Gehäuse
- 32: Radiallager
- 33: Kolben
- 34: Kolben
- 35: Kolben
- 36: Axialschrägrollenlager
- 37: Laufscheibe
- 38: Laufscheibe
- 39: Flansch
- 40: Käfig
- 41: zylindrische Wälzkörper
- e: Exzentrizität
- s: Spaltbreite
- α: Winkel
- β: Winkel

## Patentansprüche

1. Antriebsanordnung für eine Axialkolbenmaschine, insbesondere für eine Axialkolbenpumpe, mit einer antreibbaren Antriebswelle (2), mit der drehfest ein Körper verbunden ist, an dem Pumpenkolben anliegen, so dass bei Rotation des Körpers die Pumpenkolben eine axiale Hin- und Herbewegung ausführen, **dadurch gekennzeichnet, dass** der Körper als ein rotationssymmetrischer Hohlkörper (5) ausgebildet ist, der aus einem Boden (6) besteht, von dem sich eine unter einem Winkel α verlaufende konische Seitenwand (7) erstreckt, an deren Innenfläche die Pumpenkolben (8, 9, 10, 25, 26, 27, 33, 34, 35) anliegen, wobei der Boden (6) um einen Betrag (e) exzentrisch versetzt mit der Antriebswelle (2) verbunden ist.

2. Antriebsanordnung nach Anspruch 1, **dadurch gekennzeichnet, dass** zwischen dem Boden (6) des Hohlkörpers (5) und der Antriebswelle (2) ein eine Unwucht ausgleichendes Element angeordnet ist.

3. Antriebsanordnung nach Anspruch 2, **dadurch gekennzeichnet, dass** das Element als eine Scheibe (30) ausgebildet ist.

4. Antriebsanordnung nach Anspruch 1, **dadurch gekennzeichnet, dass** die Pumpenkolben (8, 9, 10) an einem Ende einen kegeligen Bereich (20) aufweisen und von einem Radial-Axialwälzlager aufgenommen sind, bestehend aus einer äußeren Laufhülse (13) mit einem zylindrischen Bereich, der an einem Ende in einen radial nach innen gerichteten Bord (14) übergeht und am anderen Ende eine kegelige Einbördelung (15) aufweist, wobei im zylindrischen und im kegeligen Bereich in Käfigen (18, 19) geführte Zylinderrollen (16, 17) abwälzen, deren Innenlaufbahnen vom Pumpenkolben (8,9,10) gebildet sind und wobei die axiale Anstellung der Pumpenkolben (8, 9, 10) gegen den rotationssymmetrischen Hohlkörper (5) über ein Federelement (11) realisiert ist.

5. Antriebsanordnung nach Anspruch 4, **dadurch gekennzeichnet, dass** der Käfig (19) des im kegeligen Bereich angeordneten Wälzlagers mit einem Permanentmagneten (24) versehen ist.

6. Antriebsanordnung nach Anspruch 1, **dadurch gekennzeichnet, dass** die Pumpenkolben als einseitig mit einem Boden (28) verschlossene Hohlkolben (25, 26, 27) ausgebildet sind, die in einer Aufnahmebohrung über ein Radiallager (32) drehbar gehalten sind, wobei am antriebsseitigen Ende des Kolbens (25, 26, 27) eine kegelartige Magnetkappe (29) aufgepreßt ist, die an der konischen Seitenwand (7) des rotationssymmetrischen Hohlkörpers (5) anliegt.

7. Antriebsanordnung nach Anspruch 1, **dadurch gekennzeichnet, dass** die Pumpenkolben (33, 34, 35) in einer Aufnahmebohrung über ein Radiallager (32) drehbar gehalten sind und mit einem gehärteten kegeligen Bereich (20) direkt an der konischen Seitenwand (7) des rotationssymmetrischen Hohlkörpers (5) anliegen, wobei die axiale Anstellung der Pumpenkolben (33, 34, 35) gegen den rotationssymmetrischen Hohlkörper (5) über ein Federelement (11) realisiert ist.

8. Antriebsanordnung nach Anspruch 7, **dadurch gekennzeichnet, dass** im antriebsseitigen Bereich der Pumpenkolben (33, 34, 35) ein aus zwei Laufscheiben (36, 37) bestehendes Axialschrägrollenlager (36) angeordnet ist, dessen eine Laufscheibe (38) drehfest mit dem in Umfangsrichtung rotierenden Pumpenkolben (33, 34, 35) verbunden ist und dessen andere nicht rotierende Laufscheibe (37) einen ersten Anlagepunkt für das Federelement (11) bildet, während ein zweiter Anlagepunkt durch das Radiallager (32) gebildet ist.

## Claims

1. Drive arrangement for an axial piston machine, in particular an axial piston pump, having a driveable drive shaft (2), to which a body is rotationally locked, on which pump pistons bears so that as the body rotates the pump pistons perform an axial reciprocating movement, **characterized in that** the body takes the form of a rotationally symmetrical hollow body (5), which comprises a base (6), from which a conical side wall (7) extends running at an angle α, on the inner face of which wall the pump pistons (8, 9, 10, 25, 26, 27, 33, 34, 35) bear, the base (6) being connected to the drive shaft (2) eccentrically offset by an amount (e).

2. Drive arrangement according to Claim 1, **characterized in that** an element compensating for an imbalance is arranged between the base (6) of the hollow body (5) and the drive shaft (2).

3. Drive arrangement according to Claim 2, **characterized in that** the element takes the form of a disk (30).

4. Drive arrangement according to Claim 1, **characterized in that** the pump pistons (8, 9, 10) have a conical area (20) at one end and are received by a radial-axial roller bearing, comprising an outer running sleeve (13) having a cylindrical area, which at one end merges into an edge (14) directed radially inwards and at the other end has a conical flanging (15), cylindrical rollers (16, 17), which are guided in cages (18, 19) and the inner raceways of which are formed by the pump piston (8, 9, 10), rolling in the cylindrical and in the conical area, and the axial contact of the pump pistons (8, 9, 10) against the rotationally symmetrical hollow body (5) being accomplished by way of a spring element (11).

5. Drive arrangement according to Claim 4, **characterized in that** the cage (19) of the roller bearing arranged in the conical area is provided with a permanent magnet (24).

6. Drive arrangement according to Claim 1, **characterized in that** the pump pistons take the form of hollow pistons (25, 26, 27), which at one side are closed by a base (28) and which are rotatably held in a seating bore by way of a radial bearing (32), a conical magnetic cap (29) being pressed on the drive-side end of the piston (25, 26, 27) and bearing on the conical side wall (7) of the rotationally symmetrical hollow body (5) .

7. Drive arrangement according to Claim 1, **characterized in that** the pump pistons (33, 34, 35) are rotatably held in a seating bore by way of a radial bearing (32) and with a hardened conical area (20) bear directly against the conical side wall (7) of the rotationally symmetrical hollow body (5), the axial contact of the pump pistons (33, 34, 35) against the rotationally symmetrical hollow body (5) being accomplished by way of a spring element (11).

8. Drive arrangement according to Claim 7, **characterized in that** arranged in the drive-side area of the pump pistons (33, 34, 35) is an axial taper-roller bearing (36) comprising two sheaves (36, 37), one sheave (38) of which is rotationally locked to the pump piston (33, 34, 35) rotating in a circumferential direction, and the other nonrotating sheave (37) of which forms a first bearing point for the spring element (11), whilst a second bearing point is formed by the radial bearing (32).

## Revendications

1. Système d'entraînement pour une machine à piston axial, notamment pour une pompe à piston axial, avec un arbre d'entraînement (2) auquel est relié un corps en rotation solidaire sur lequel reposent des pistons de pompe, si bien que lorsque le corps est en rotation, les pistons de pompe effectuent un mouvement axial de va-et-vient, **caractérisé en ce que** le corps est conçu comme un corps creux à symétrie de révolution (5) composé d'un fond (6), d'où part une paroi latérale conique (7) formant un angle α, sur la surface interne de laquelle s'appuient les pistons de pompe (8, 9, 10, 25, 26, 27, 33, 34, 35), le fond (6) étant relié à l'arbre d'entraînement (2) de façon légèrement excentrée d'un écart (e).

2. Système d'entraînement selon la revendication 1, **caractérisé en ce qu'**un élément de rééquilibrage est placé entre le fond (6) du corps creux (5) et l'arbre d'entraînement (2).

3. Système d'entraînement selon la revendication 2, **caractérisé en ce que** l'élément est conçu comme un disque (30).

4. Système d'entraînement selon la revendication 1, **caractérisé en ce que** les pistons de pompe (8, 9, 10) comportent une zone conique (20) sur une extrémité et sont admis par un palier à roulement radial par rapport à l'axe, constitué d'un manchon de roulement externe (13) avec une zone cylindrique, dont une extrémité se prolonge dans un bord (14) orienté vers l'intérieur de façon radiale et l'autre extrémité comporte une bordure conique (15), des rouleaux cylindriques (16, 17) étant en roulement dans des cages (18, 19) dans la zone cylindrique et dans la zone conique, les pistes de roulement internes étant formées par les pistons de pompe (8, 9, 10) et l'attaque axiale des pistons de pompe (8, 9, 10) contre le corps creux (5) à symétrie de révolution étant réalisée par le biais d'un ressort (11).

5. Système d'entraînement selon la revendication 4, **caractérisé en ce que** la cage (19) du palier à roulement située dans la zone conique est équipée d'un aimant permanent (24).

6. Système d'entraînement selon la revendication 1, **caractérisé en ce que** les pistons de pompe sont conçus comme des pistons creux (25, 26, 27) fermés d'un côté par le fond (28), qui sont maintenus en rotation dans un logement au-dessus d'un palier radial (32), un bonnet d'aimant (29) conique étant pressé sur l'extrémité d'entraînement des pistons (25, 26, 27) et s'appliquant sur la paroi latérale conique (7) du corps creux (5) à symétrie de révolution.

7. Système d'entraînement selon la revendication 1, **caractérisé en ce que** les pistons de pompe (33, 34, 35) sont maintenus de façon rotative dans un logement au-dessus d'un palier radial (32) et s'appliquent avec une zone conique durcie (20) directement sur la paroi latérale conique (7) du corps creux (5) à symétrie de révolution, l'attaque axiale des pistons de pompe (33, 34, 35) étant dirigée contre le corps creux (5) à symétrie de révolution par un ressort (11).

8. Système d'entraînement selon la revendication 7, **caractérisé en ce qu'**un palier à roulement (36) disposé en biais par rapport à l'axe, composé de deux disques de roulement (36, 37), se trouve dans la zone d'entraînement des pistons de pompe (33, 34, 35), un disque de roulement (38) étant relié en rotation solidaire avec le piston de pompe (33, 34, 35) qui tourne en direction de la périphérie et l'autre disque de roulement (37) non rotatif formant un premier point d'appui pour le ressort (11), tandis qu'un autre point d'appui est formé par le palier radial (32).
